# EUROPÄISCHE PATENTSCHRIFT

(11) **EP 2 813 722 B1**
(45) Veröffentlichungstag und Bekanntmachung des Hinweises auf die Patenterteilung: **17.05.2017**
(21) Anmeldenummer: 14002022.3
(22) Anmeldetag: 12.06.2014
(51) Int. Cl.: F16D 63/00, F16D 121/04

(54) **Mit in der Kolbenstange integriertem Käfig ausgestattete Brems- und/oder Klemmvorrichtung eines an mindestens einer Schiene geführten Schlittens**
Rail driven carriage braking and/or clamping device with cage integrated in the piston rod
Dispositif de serrage et/ou de freinage de chariot sur rail, doté d'une cage intégrée dans la tige de piston

(30) Priorität: 12.06.2013 DE 102013009780
(43) Veröffentlichungstag der Anmeldung: 17.12.2014
(73) Patentinhaber: Zimmer, Günther Stephan, 77866 Rheinau (DE); Zimmer, Martin Johannes, 77866 Rheinau (DE)
(72) Erfinder: Zimmer, Günther Stephan, 77866 Rheinau (DE); Zimmer, Martin Johannes, 77866 Rheinau (DE)
(74) Vertreter: Thämer, Wolfgang

(56) Entgegenhaltungen:
- EP-A1- 2 381 118
- WO-A1-2010/091672
- DE-A1-102010 045 108

## Beschreibung

Die Erfindung betrifft eine Brems- und/oder Klemmvorrichtung eines an mindestens einer Schiene geführten Schlittens, wobei die in einem Gehäuse (10) untergebrachte Vorrichtung mindestens ein, über ein Keilgetriebe betätigbares, Reibgehemme umfasst, das wenigstens einen an die Schiene anpressbaren Reibbacken aufweist. Die mit Hilfe von Fremdenergie bewegten Keilgetriebeteile sind zur Be- und zur Entlastung des Reibgehemmes pro Be- und Entlastungsrichtung mittels mindestens eines Stellglieds oder mittels eines Federsystems bewegbar, wobei das Federsystem mindestens ein Federelement umfasst. Das Keilgetriebe weist mindestens einen Käfig auf, der zwischen mindestens einem Druckstück und/oder Reibbacken und mindestens einer gehäuseseitigen Abrollzone oder einem im Gehäuse angeordneten Stützelement verschiebbar gelagert ist.

Aus der DE 10 2004 027 984 und der WO 2010/091672 A1 ist eine derartige Brems- und/oder Klemmvorrichtung bekannt. Ein von einer Zylinder-Kolben-Einheit angetriebener Schiebekeil wirkt über mindestens einen Wälzkörper auf eine Keilfläche eines zu einem Reibgehemme gehörenden Reibbacken.

Aus der EP 2 381 118 A1 ist eine Brems- und/oder Klemmvorrichtung mit zwei Reibgehemmen bekannt, bei der ein erstes Reibgehemme über ein niedrig übersetztes und ein zweites Reibgehemme über ein hoch übersetztes Getriebe betätigt wird.

Beide Getriebe sind Keilgetriebe, bei denen der treibende Keil am Kolben eines Stellglieds angeordnet ist.

Die DE 10 2010 045 108 A1 beschreibt eine Brems- und/oder Klemmvorrichtung, bei der das Reibgehemme jeder Seite über jeweils zwei verschiebbare Keile betätigt wird. Das Keilgetriebe mit kleiner Übersetzung ist federbetätigt, während das Keilgetriebe mit hoher Übersetzung z.B. pneumatisch angetrieben wird.

Der vorliegenden Erfindung liegt die Problemstellung zugrunde, eine Broms- und/oder Klemmvorrichtung zu entwickeln, die bei großen Klemmkräften und kurzen Reaktionszeiten einen einfachen und bauraumsparenden Aufbau hat und zudem dauerhaft wartungsfrei ist.

Diese Problemstellung wird mit den Merkmalen der Patentansprüche 1 und 7 gelöst. Dazu schließt das bewegliche Teil des Stellglieds, einschließlich seiner Längsführung, gegenüber der Schlittenverfahrrichtung einen Keilwinkel von 0,2 bis 5 Winkelgraden ein. Die gehäuseseitige Abrollzone oder das Stützelement hat eine dem Käfig zugewandte Stirnseite, die zumindest bereichsweise eine ebene Fläche oder Rinne aufweist, die parallel zur Verfahrrichtung des beweglichen Teils des Stellgliedes und/oder dessen Längsführung ausgerichtet ist. Das Druckstück weist eine Abrollfläche auf, deren Flächennormale oder Mittellinie senkrecht zur Schlittenverfahrrichtung ausgerichtet ist.

Alternativ hat die gehäuseseitige Abrollzone oder das Stützelement eine dem Käfig zugewandte Stirnseite, die zumindest bereichsweise eine Fläche oder Rinne aufweist, die gegenüber der Schlittenverfahrrichtung einen Keilwinkel von 0,2 und 5 Winkelgraden einschließt. Die Längsführung des beweglichen Teils des Stellgliedes schließt mit der Schlittenverfahrrichtung einen Führungswinkel ein, der in ei nem Bereich liegt, der zwischen Null Winkelgraden und dem halben Keilwinkel ± einem Viertel des Keilwinkels definiert ist.

Demnach liegt der Keilwinkel zwischen null Winkelgraden und einen Keilwinkelbereich. Der Keilwinkelbereich ist definiert durch den Keilwinkel und einem diesen umgebenden Toleranzbereich.

In der Querausnehmung des im beweglichen Teil des Stellglieds integrierten Käfigs sind beispielsweise 2, 6 oder 8 Wälzkörper angeordnet. Die Anzahl der Wälzkörper sind immer zwei oder Vielfache von zwei, um sicherzustellen, dass einander kontaktierende Wälzkörper aneinander primär abrollen.

Bei zumindest einer der gezeigten Ausführungsvarianten dieser Brems- und/oder Klemmvorrichtung wird die am Maschinentisch ortsfeste Schiene, an der der die Vorrichtung tragende Schlitten abgebremst oder festgeklemmt werden soll, von einem Grundkörper in Form einer z.B. c-förmigen Klammer bereichsweise umgriffen. Der Grundkörper ist hierbei in der Verfahrrichtung des Schlittens formsteif am Schlitten befestigt, so dass der Bremskraftfluss den kürzest möglichen Weg zwischen Maschinenbett und Schlitten hat.

Bei mindestens einer Variante der Brems- und/oder Klemmvorrichtung wird ein Schiebekeilgetriebe von einem pneumatischen Stellglied zum Bremsen und/oder Klemmen betätigt, während bei einer zweiten Variante ein derartiger Antrieb nur zum Lösen der Brems- und/oder Klemmvorrichtung benutzt wird. Der oder die jeweiligen Antriebe können bei ihrer Betätigung z.B. jeweils mindestens einen Federspeicher spannen, dessen Federenergie später bei einer entsprechenden - der pneumatischen Antriebsbewegung - entgegengesetzt wirkenden Bewegung freigesetzt wird.

Zwischen dem Stellglied und dem jeweiligen Reibbacken wird ein schmal bauendes Schiebekeilgetriebe eingesetzt, um die erforderliche Brems- bzw. Klemm- oder Lösekraft aufzubringen. Dieses Schiebekeilgetriebe ersetzt den bekannten antreibenden Schiebekeil durch einen antreibbaren Käfig, in dem quer zur Stellgliedverfahrrichtung in einer Querausnehmung mindestens zwei sich kontaktierende Wälzkörper gelagert sind. Die nebeneinander liegenden, quer zur Stellgliedverfahrrichtung angeordneten Wälzkörper werden mittels des Käfigs in einen sich in Verfahrrichtung verengenden Spalt gezwängt, auf dessen beide seitliche Wandungen sie spreizend wirken. Die erste Wandung des sich verengenden Spalts ist eine innere Anlagefläche einer Einstellschraube oder eine Gehäusewandung. Die zweite Wandung ist eine innere Anlagefläche eines Reibbackens oder die Anlagefläche eines auf den Reibbacken wirkenden Getriebeteils.

Die Verengung des Spalts ist durch die Neigung der Wandungen gegenüber der Stellgliedverfahrrichtung oder der Verschieberichtung des Käfigs vorgegeben. Hierbei ist eine der beide Wandungen pro Reibgehemme gegenüber der Stellgliedverfahrrichtung mit einem vorgegebenen Keilwinkeln geneigt.

Anstelle eines pneumatischen Stellglieds können u.a. auch hydraulische Zylinder-Kolben-Einheiten, Membranzylinder, Hubmagnete, Tauchspulenantriebe, Piezostellglieder, Formgedächtniselemente oder Federspeicher verwendet werden. Alle Stellglieder können sowohl für die Be- als auch für die Entlastungsrichtung verwendet werden. Dabei können gleich- oder verschiedenartige Stellglieder pro Belastungsrichtung - hintereinander oder nebeneinander im oder am Gehäuse angeordnet werden.

Die gesamte Brems- und/oder Klemmvorrichtung hat im Querschnitt - also normal zur Führungslängsrichtung - eine Kontur, die innerhalb der Querschnittskontur der meisten handelsüblichen Führungswagen bleibt. Selbstverständlich kann die Brems-und/oder Klemmvorrichtung auch vollständig in einen Führungswagen oder in den Schlitten integriert werden. Auch kann die Vorrichtung als Notbremse eingesetzt werden. Die Vorrichtung ist nicht auf lineare Führungen beschränkt. Sie kann bei entsprechender Anpassung der Bremsbacken auch auf Kreisbahnen oder anderen z.B. in einer Ebene liegenden gekrümmten Bahnen verwendet werden.

Weitere Einzelheiten der Erfindung ergeben sich aus den Unteransprüchen und der nachfolgenden Beschreibung schematisch dargestellter Ausführungsformen.
- Figur 1:: Perspektivische Darstellung einer Brems- und/oder Klemmvorrichtung;
- Figur 2:: vertikaler Teilquerschnitt bzw. Frontansicht zu Figur 1;
- Figur 3:: horizontaler Längsschnitt zu Figur 2, wobei links mittels Federkraft und rechts mittels Druckluft geklemmt wird. Links zentriert sich das bewegliche Teil des Stellglieds zwischen dem Druckstück und der Einstellschraube. Rechts bewegt sich das bewegliche Teil des Stellglieds parallel zur Anlagefläche der Einstellschraube;
- Figur 4:: wie Figur 3, in geklemmtem Betriebszustand;
- Figur 5:: Prinzipschnitt durch ein Gehäuseteil mit Stellglied und Keilgetriebe, wobei der Aktor im Gehäuse linear geführt bewegt wird, das Druckstück ist eingefahren;
- Figur 6:: Prinzipschnitt wie in Figur 5, jedoch ist das Druckstück ausgefahren;
- Figur 7:: Prinzipschnitt durch ein Gehäuseteil mit Stellglied und Keilgetriebe, wobei der Aktor im Gehäuse linear bewegt wird, das Druckstück ist eingefahren;
- Figur 8:: Prinzipschnitt wie in Figur 7, jedoch ist das Druckstück ausgefahren;
- Figur 9:: Prinzipschnitt wie in Figur 5, jedoch mit einem Aktor, der beim Hub eine Kippbewegung ausführt, das Druckstück ist eingefahren;
- Figur 10:: Prinzipschnitt wie in Figur 9, jedoch mit ausgefahrenem Druckstück;
- Figur 11:: Verkleinerung zu Figur 9 mit eingezeichneten Ebenen;
- Figur 12:: Prinzipschnitt wie in Figur 7, jedoch mit einer Aktorführung, deren Führungswinkel dem halben Keilwinkel entspricht; das Druckstück bzw. der Aktor stehen in Mittelstellung;
- Figur 13:: Prinzipschnitt wie in Figur 12, jedoch mit eingefahrenem Druckstück;
- Figur 14:: Prinzipschnitt wie in Figur 12, jedoch mit ausgefahrenem Druckstück;
- Figur 15:: Aktor, kolbenstangenseitige Ansicht;
- Figur 16:: Aktor, kolbenbodenseitige Ansicht.

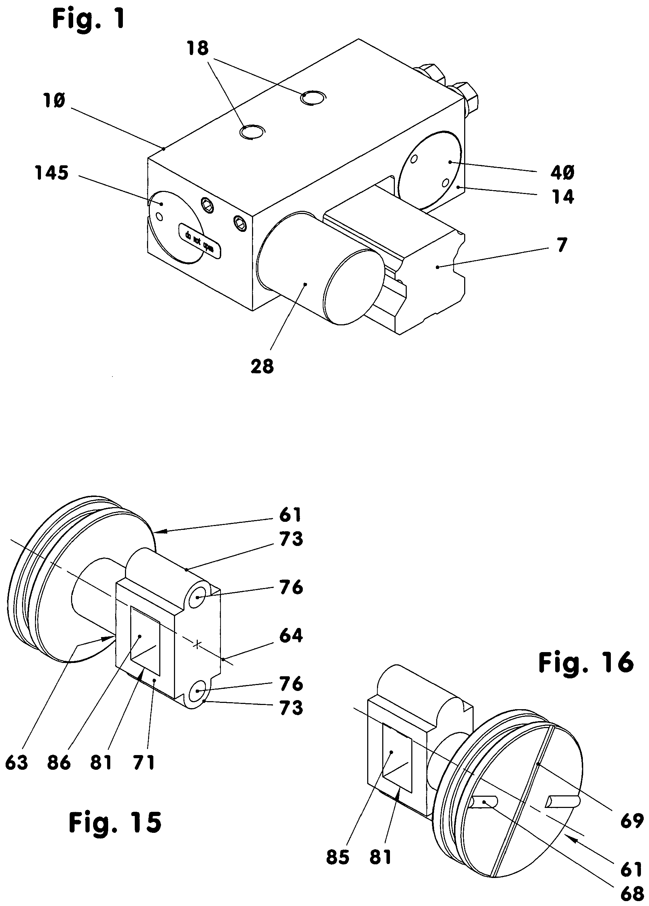

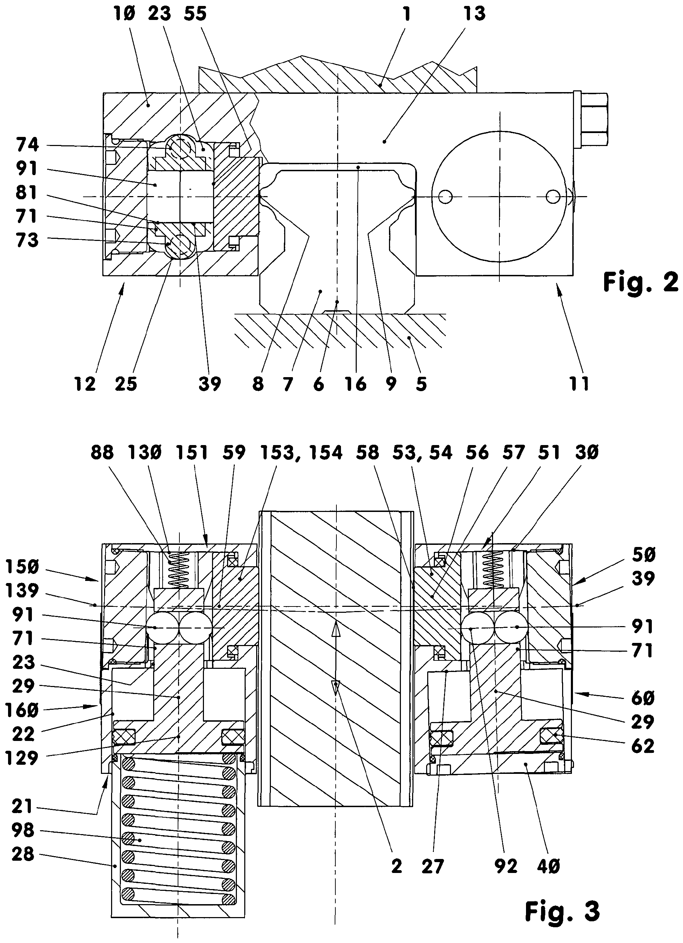

Die Figuren 1 bis 4 zeigen eine Brems- und/oder Klemmvorrichtung, die nach Figur 1 eine Führungsschiene (7) umgreift. Sie besteht u.a. aus einem Grundkörper (10), zwei Stellgliedern (60, 160), vgl. Figur 3, mehreren Rückhubfederelementen (88) und zwei Keilgetrieben (50, 150). Die Vorrichtung ist über den Grundkörper (10) an dem Schlitten (1) befestigt, der an der Führungsschiene (7) abgebremst oder geklemmt werden soll, vgl. Figur 2. Die Führungsschiene (7) verläuft parallel zur Schlittenbewegungsrichtung bzw. zur Führungslängsrichtung (2).

In der Figur 1 ist u.a. ein Abschnitt einer doppelprismatischen Führungsschiene (7) dargestellt. Die Führungsschiene (7) besteht aus einem Stab mit einem annähernd quaderförmigen Hüllquerschnitt, in den beidseitig je eine im Wesentlichen v-förmige Nut mit verbreitertem Nutgrund eingearbeitet ist. Sie kontaktiert über ihre Bodenfläche z.B. das sie tragende Maschinenbett (5), vgl. Figur 2.

Die Führungsschiene (7) hat nach Figur 2 oberhalb der v-förmigen Nut u.a. zwei Nebenflächen (8, 9), die sich, bezogen auf die vertikale Mittenlängsebene (6), spiegelbildlich gegenüberliegen. Beide Nebenflächen (8, 9) sind zueinander parallel ausgerichtet. Sie dienen den Reibgehemmen (51, 151) als Anlageflächen für die Reibbacken (53) bzw. Druckstücke (54).

Der Grundkörper (10) hat mindestens eine Gehäusezone (11) und/oder (12), die neben oder über der Führungsschiene (7) so platziert ist, dass das in ihr gelagerte Stellglied (60, 160) über das integrierte Keilgetriebe (50, 150) das bremsklotzartige Druckstück (54, 154) zum Bremsen und/oder Klemmen gegen die Führungsschiene (7) pressen kann.

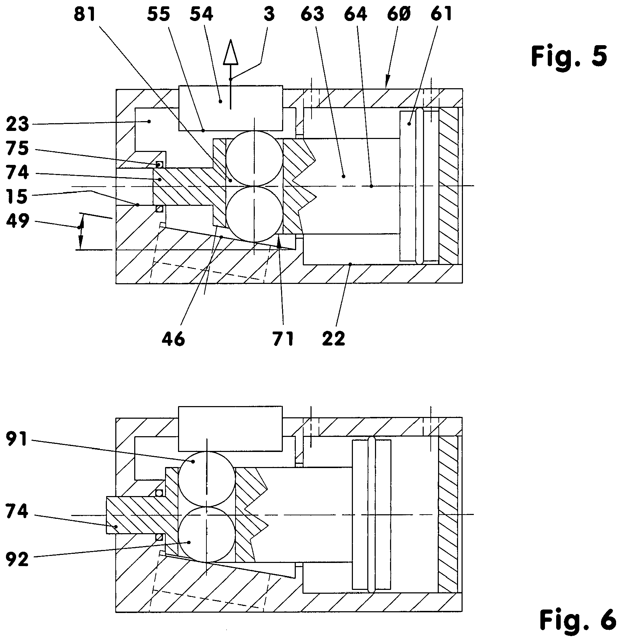

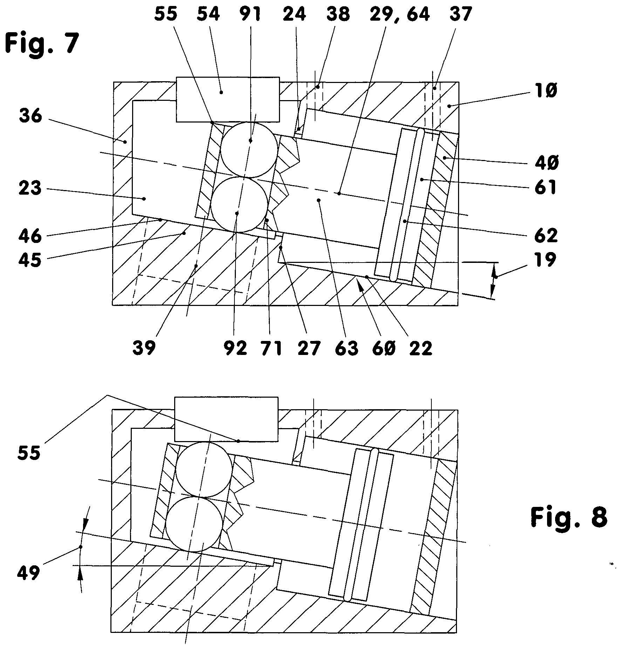

Die Figuren 5 bis 13 zeigen schematisch vier vergleichbare z.B. halbseitige Klemmvorrichtungen, die in einer Gehäusezone (11) und/oder (12) angeordnet sind. Bei jeder Klemmvorrichtung bewegt sich ein Aktor, hier ist es ein Kolben (61) mit einer z.B. angeformten die Käfigfunktion übernehmenden Kolbenstange (63), zwischen einer hinteren und vorderen Endlage zum Aus- bzw. Einfahren des Druckstücks (54) hin und her. Der Kolben (61) ist dabei in der z.B. zylindermantelförmigen Stellgliedlängsführung (22) geführt. Letztere schließt zumindest bei den in den Figuren 7 bis 14 offenbarten Varianten mit der Führungslängsrichtung (2) einen Führungswinkel (19) ungleich Null ein.

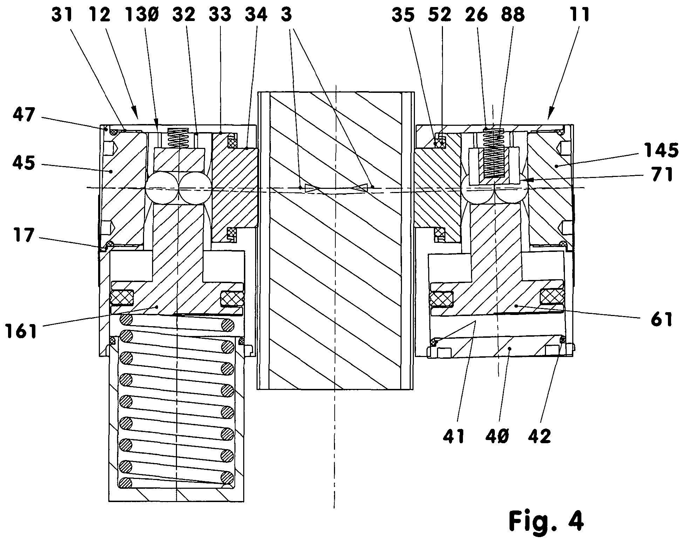

Die beidseits z.B. abgeflachte, den Käfig (71) umfassende Kolbenstange (63), ähnlich der aus den Figuren 3 und 4, ragt in die neben der Stellgliedlängsführung (22) gelegene Keilgetriebeausnehmung (23) hinein. In einer Querausnehmung (81), z.B. einem Rechteckkanal des Käfigs (71) sind zwei Wälzkörper (91, 92) geführt. Die Querausnehmung (81) ist quer zur Mittellinie (64) des Aktors (61) orientiert. Ihre entlang der Mittellinie (64) messbare Breite ist geringfügig, z.B. 2 bis 100 µm, breiter als der Durchmesser der Wälzkörper (91, 92). In der Querausnehmung (81) sitzen die Wälzkörper (91, 92) nebeneinander, wobei sie sich im mittleren Bereich der Querausnehmung berühren. Außerhalb der Querausnehmung (81) kontaktiert der eine Wälzkörper (92) eine gehäuseseitige Abrollzone (46), die als Keilebene z.B. um mehrere Winkelgrade gegenüber der Schlittenverfahrrichtung (2), vgl. Figur 3, um den Keilwinkel (49) geneigt ist. Der andere Wälzkörper (91) liegt eingekeilt zwischen dem Wälzkörper (92) und dem Druckstück (54). Die z.B. ebene Druckstückabrollfläche (55) ist parallel zur Schlittenverfahrrichtung (2) ausgerichtet. Beide Wälzkörper (91, 92) haben im Idealfall Mittellinien, die in einer Ebene liegen, wobei diese Ebene von der Mittellinie (64) der Kolbenstange (63) senkrecht geschnitten wird.

Wird der Kolben (61), z.B. nach Figur 7, auf seiner Kolbenbodenseite über die hintere Druckluftbohrung (37) mit Druckluft beaufschlagt, fährt der Aktor (61) nach links. Die Wälzkörper (91, 92) rollen an der Keilzone (46) und am Druckstück (54) ab. Dabei bewegen sich der in der Kolbenstange (63) integrierte Käfig (71) und die von ihm geführten Wälzkörper (91, 92) nach links. Die Bewegung des Aktors (61) ist beendet, wenn das Druckstück (54) fest an der Führungsschiene (7) anliegt, vgl. Figur 4, oder der Kolbenweg durch den Anschlag des Kolbens (61) an der zwischen der Zylinderbohrung (22) und der Keilgetriebeausnehmung (23) gelegenen Gehäusezwischenwand (24) erreicht ist.

Während dieses Kolbenhubs wird eine schon vorgespannte Rückholfeder (88), die z.B. zwischen der Kolbenstange (63) und z.B. einer Einsenkung (26) in der Keilgetriebeausnehmung (23) eingespannt ist, zusätzlich gespannt, vgl. Figur 6.

Um die Klemmung zu lösen, vgl. Figuren 7 und 8, wird über die vordere Druckluftbohrung (38) Druckluft vor die Kolbenstangenseite des Kolbens (61) gefördert. In der Folge fahren der Kolben (61) und die Kolbenstange (63) zurück. Die Rückfahrbewegung des Aktors (61) wird ggf. von der Rückholfeder (88) unterstützt, vgl. Figuren 3 und 4.

Die Klemmvorrichtung nach den Figuren 5 bis 7 zeichnet sich durch eine Aktorlinearbewegung aus, wobei der Aktor (61) im Gehäuse (10) an zwei Stellen geführt wird. Die erste Stelle ist der Kontaktbereich, in dem der Kolben (61) über seinen Dichtring (62) in der z.B. zylindrischen Stellgliedlängsführung (22) beispielsweise gasdicht anliegt. Die zweite Stelle ist eine Kolbenstangenführung, in der das vordere Ende (74) der Kolbenstange (63) in die Führungsbohrung (15) des Gehäuses (10) hinein- oder hindurchragt. Im zuletzt genannten Fall weist die Führungsbohrung (15) des Gehäuses (10) eine Dichtung (75) auf, die an vorderen Ende (74) der Kolbenstange (63) z.B. radial dicht anliegt.

Bei dieser Klemmvorrichtungsvariante ist die Zylinderbohrung (22) bzw. die Stellgliedlängsführung parallel zur Schlittenverfahrrichtung (2) ausgerichtet, während die Keilzone (46) um den Keilwinkel (49) geneigt ist. Hier ist somit der Führungswinkel (19) null. Die Position des Führungswinkels ist u.a. der Figur 7 zu entnehmen.

Beim Einfahren der Kolbenstange (63) in die Keilgetriebeausnehmung (23) werden die Wälzkörper (91, 92) in der Querausnehmung (81) des Käfigs (71) aufgrund der Steigung der z.B. ebenen Keilzone (46) nach oben - quer zur Führungslängsrichtung - abgedrängt, um das Druckstück (54) in Klemmrichtung (3) zu bewegen. Das Verschieben der Wälzkörper (91, 92) wird mit zunehmendem Hub größer, vgl. Figur 6.

In den Figuren 7 und 8 wird eine Klemmvorrichtung gezeigt, bei der zur Realisierung einer Aktorlinearbewegung die geradlinig verlaufende Stellgliedlängsführung (22) parallel zu der z.B. hier ebenen Keilzone (46) oder einer vergleichbaren wälzkörperführenden Rinne ausgerichtet ist. Wird eine Rinne benutzt, hat diese eine Innenwandung, die einem Teil eines Mantels eines z.B. geraden Zylinders entspricht, dessen Durchmesser z.B. geringfügig größer als der Durchmessers des darin abrollenden, kugelförmigen Wälzkörpers ist. Ggf. kann die Rinne auch durch einen Kanal ersetzt werden, dessen Querschnitt z.B. trapezförmig, recht- oder dreieckig gestaltet ist. Der Keilwinkel (46) entspricht dem Führungswinkel (19).

Da die Keilzone (46) und die Stellgliedlängsführung (22) die gleiche Steigung haben, bewegt sich die Kolbenstange (63) bei ihrer Aus- und Einfahrbewegung stets linear, vgl. Figuren 7 und 8. Sie führt keine Schwenkbewegung aus.

Die in der Querausnehmung (81) gelagerten Wälzkörper (91, 92) haben im Idealfall Mittellinien, die in einer Ebene liegen, die zum einen von der Mittellinie (64) der Kolbenstange (63) senkrecht geschnitten wird und die zum anderen senkrecht auf der Keilzone (46) steht.

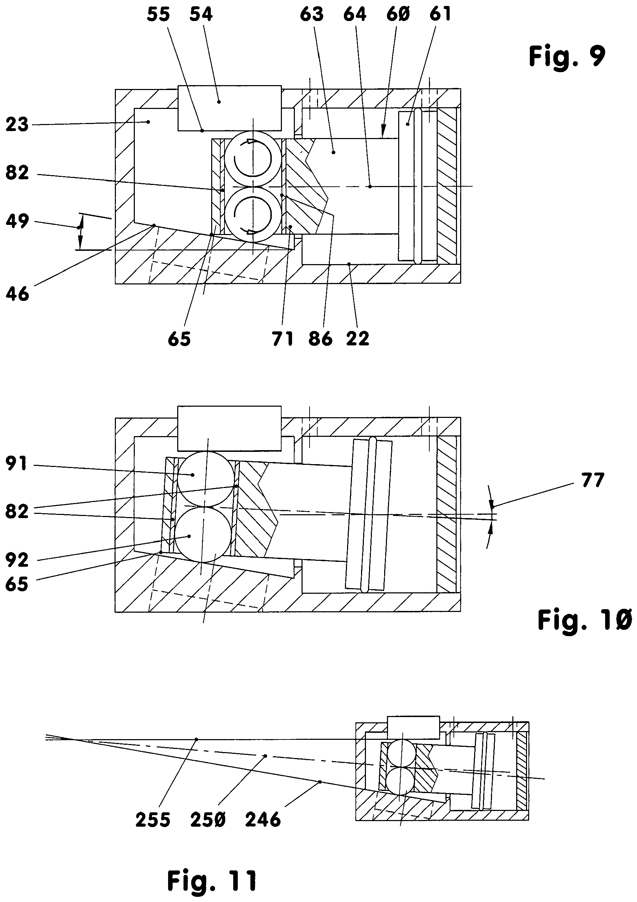

Bei einer Klemmvorrichtung nach den Figuren 9 und 10 führt die Kombination aus Kolben (61) und Kolbenstange (63) bei jedem Hub eine Aktorkippbewegung aus. Als Kippbewegung wird hier eine Schwenkbewegung des Aktors (61) bezeichnet, die nur in eine Richtung um eine senkrecht zur Darstellungsebene der Figuren 9 und 10 orientierte Schwenkachse erfolgt.

Hier ist die Zylinderbohrung (22) bzw. die Stellgliedlängsführung - wie bei der Variante nach den Figuren 5 und 6 - parallel zur Schlittenverfahrrichtung (2) ausgerichtet, während die Keilzone (46) um den Keilwinkel (49) geneigt ist. Der Führungswinkel (19) ist somit null.

Beim Einfahren der Kolbenstange (63) in die Keilgetriebeausnehmung (23) wird diese aufgrund der Steigung der z.B. ebenen Keilzone (46) nach rechts abgedrängt, um das Druckstück (54) in Klemmrichtung (3) zu bewegen. Die Abdrängbewegung stellt sich durch die gegenseitige Abrollbewegung der WälzKörper (91, 92) ein. Im vorliegenden Fall ist die Querausnehmung (81) quer zur Mittellinie (64) der Kolbenstange (63) orientiert. Dadurch steht die ebene Kanalwandung (86), an der beide Wälzkörper (91, 92) beim Verfahren des Aktors (61) entlanggleiten, normal zur Mittellinie (64). Beim einkeilenden Verfahren des Aktors (61) rollt der Wälzkörper (91) - sich im Uhrzeigerdrehsinn um seine Mittellinie rotierend - am Druckstück (54) und am Wälzkörper (92) ab. Zugleich rollt der Wälzkörper (91) - sich im Gegenuhrzeigerdrehsinn um seine Mittellinie rotierend - an der Keilzone (46) und am Wälzkörper (91) ab. Beide Zylinderrollen (91, 92) stützen sich hierbei unter einer Gleitbewegung an der hinteren Kanalwandung (86) der Querausnehmung (81) ab. Im Resultat wird das entsprechende Druckstück (54, 154) auf die Führungsschiene (7) zubewegt, vgl. Figuren 2 und 4.

Da der Wälzkörper (92) - aufgrund der Geometrieverhältnisse - besonders zu Beginn des Verfahrens des Aktors (61), vgl. Figur 9, eine größere Abrollstrecke an der Keilzone (46) zurücklegen muss als der Wälzkörper (91) an der Druckstückabrollfläche (55) des Druckstücks (54), rotieren beide Wälzkörper (91) und (92) mit unterschiedlicher Drehzahl, sofern an den Flächen (55) und (46) sich - rein fiktiv - kein Gleiten einstellt. Zwischen den Wälzkörpern (91, 92) und den Flächen (55, 46) stellt sich der energetisch günstigste Zustand dann ein, wenn zwischen den beteiligten Bauteilen überall vergleichbare Abrollbedingungen einstellen. Diese sind besonders günstig, wenn die Mittellinie (64) in einer Hilfsebene (250) liegt, vgl. Figur (11), die genau zwischen den Flächen (55) und (46) liegt. Hierbei schneiden sich die Hilfsebene (250) und die Ebenen (255, 246) der Flächen (55) und (46) in nur einer Schnittgeraden, wobei der eingeschlossen Winkel zwischen der Flache (55) und der Hilfsebene (250) dem eingeschlossen, zwischen der Hilfsebene (250) und der Fläche (46) gelegenen, Winkel entspricht. Die Ebene (246) ist dabei ortsfest gegenüber dem Gehäuse (10), während die Ebene (255) beim Verfahren des Aktors (61) sich nach Figur 11 nach oben verlagert. Die zwischen den Ebenen (255) und 246) gelegenen Schnittgerade wandert demnach nach links, also dem Aktor (61) voraus.

Aufgrund dieser Verhältnisse versucht der Aktor (61) seine Mittellinie (64) in genannte Hilfsebene (250) einzuschwenken. Dieses Einschwenken erleichtet eine reibungsmindernde Beschichtung (82) der Kanalwandungen (85, 86). Die Beschichtung (82) hat dazu einen Reibwert, der z.B. kleiner ist als die Hälfte des Reibwertes, der zwischen den Wälzkörpern (91, 92) vorhanden ist. Solle das Einschwenken nicht stattfinden, kann die Kolbenstange (63) mit ihrer Kante (65) an der Keilzone (46) entlang. Dazu kann diese verschleißfest beschichtet und/oder mit einer besonders gleitfähigen Beschichtung ausgestattet sein. Ggf. kann anstelle der Kante (65) eine gewölbte Gleitfläche, ein beweglicher Gleitschuh oder dergleichen angeordnet werden.

Das Kippen des Aktors (61) in eine Richtung wird mit zunehmendem Hub größer, vgl. Figur 10. Die Kippbewegung des Aktors (61) erreicht im Ausführungsbeispiel bei Hubende einen Kippwinkel (77) von z.B. 3 Winkelgraden.

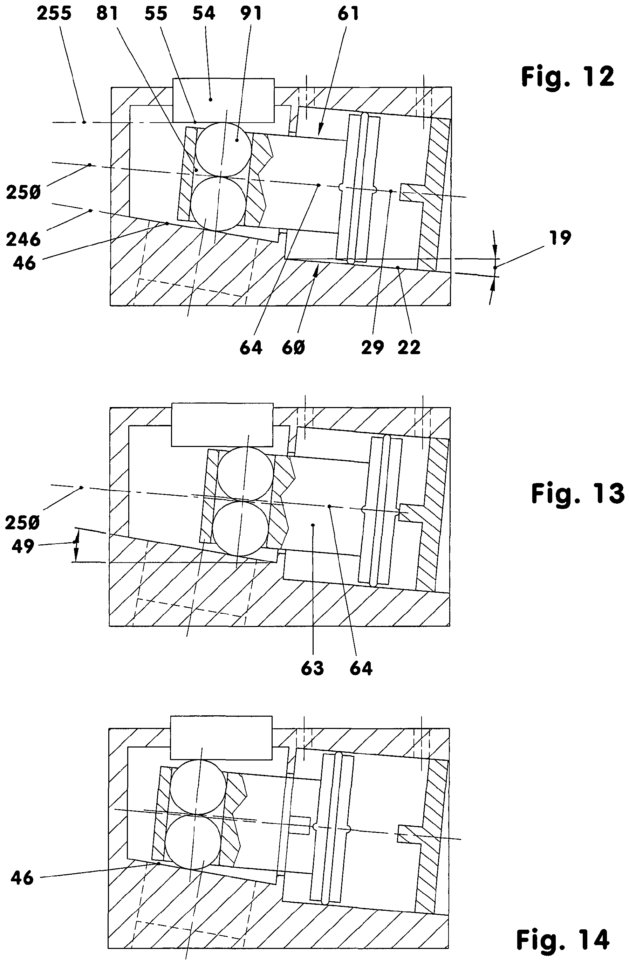

Die Figuren 12 bis 14 zeigen eine Klemmvorrichtung, bei der der Aktor (61) bei jedem Hub eine Linearbewegung ausführt, wobei sich die Wälzkörper - wie bei der Variante aus den Figuren 5 und 6 - in der Querausnehmung (81) des Käfigs (71) quer zur Mittellinie (64) verlagern. Im vorliegenden Fall ist die Stellgliedlängsführung (22) gegenüber der Schlittenverfahrrichtung (2) um einen Führungswinkel (19) geneigt, der z.B. dem halben Keilwinkel (49) entspricht. Somit schneidet sich, nach Figur 12, also wenn der Wälzkörper (91) in der Mitte der Druckstückabrollfläche (55) anliegt, die nach links theoretisch ausgeweitete Ebene (255) der Druckstückabrollfläche (55) mit der ebenfalls nach links theoretisch fortgesetzten Ebene (246) der Keilzone (46) in einer Geraden, die zugleich von der Kolbenstangenmittellinie (64) geschnitten wird. Dabei liegt bei einem halben Kolbenhub die Kolbenstangenmittellinie (64) parallel zur Stellgliedlängsführung (22), vgl. Figur 12. Die durch die Mittellinien der Wälzkörper (91, 92) gebildete Ebene schneidet hier die z.B. ebene Keilzone (46) und die Druckstückabrollfläche (55) unter dem gleichen Winkel.

Befindet sich der Kolben (61) in seiner hinteren Endlage, vgl. Figur 13, befindet sich die Mittellinie (64) der die Kolbenstange (63) parallel versetzt oberhalb einer Ebene (250), die genau zwischen den Ebenen (250) und (246) liegt. Bewegt sich nun der Aktor (61) aus der hinteren Endlage, wandert die Ebene (250), verursacht durch die Verlagerung der Ebene (250), parallel nach oben. Beim Durchgang durch den mittleren Aktorhub liegt die Mittellinie kurzzeitig in der Ebene (250). Beim weiterfahren des Aktors (61) entfernt sich die Ebene (250) zunehmend von der Mittellinie (64), vgl. Figur 14. In der vorderen Endlage des Aktors (61) liegt die Ebene (250) am weitesten oberhalb der Mittellinie (64).

Die Figuren 1 bis 4 zeigen eine Brems- und/oder Klemmvorrichtung mit zwei die Führungsschiene (7) umgreifenden Reibgehemmen (51, 151). Die Vorrichtung besteht u.a. aus einem Grundkörper (10), zwei doppeltwirkenden pneumatischen Stellgliedern (60) oder zwei einfachwirkenden Stellgliedern (160). Hier ist - aus Vereinfachungsgründen - jeweils im rechten Grundkörperbereich (11) ein doppeltwirkendes pneumatisches Stellglied (60) dargestellt, während im linken Grundkörperbereich (12) ein einfachwirkendes pneumatisches Stellglied (160) angeordnet ist. Bei Letzterem sorgt z.B. eine in einem am Gehäuse (10) befestigten Federtopf (28) angeordnete Schraubendruckfeder (98) für das klemmende Zustellen der Druckstücke (154) der Reibgehemme (151). In dem Federtopf (28) können anstelle der Schraubenfedern auch gleich- oder wechselsinnig gestapelte Tellerfedern oder andere geeignete Federtypen verwendet werden.

Selbstverständlich sind bei den gebauten Vorrichtungen in beiden Grundkörperbereichen (11, 12) jeweils die gleichen Stellglieder (60) oder (160) angeordnet. Dies gilt auch für die im Folgenden näher beschriebenen Führungen der Aktoren (61).

In den Figuren 1 bis 4 hat die jeweils linke Klemmvorrichtung einen Aktor (161), der eine Kippbewegung, vgl. Figuren 9 und 10, ausführt, während der Aktor (61) der rechten Klemmvorrichtung linear oder zumindest annähernd linear - die Abweichung von der Linearachse liegt bei maximal 0,2 Winkelgraden - bewegt wird, vgl. hierzu die Figuren 7 bis 8.

Der z.B. einteilige, aus 16 MnCr 5 gefertigte Grundkörper (10) ist im Wesentlichen ein quaderförmiges Bauteil, das an seiner Unterseite eine z.B. außermittige Nut (16) mit einem z.B. rechteckigen Querschnitt aufweist. In die Nut (16) taucht die Führungsschiene (7), nach Figur 2, zu ca. drei Viertel ein. Der Grundkörper (10) hat beispielsweise folgende Abmessungen: 70 mm x 35 mm x 28 mm.

Der Grundkörper (10) hat z.B. eine rechte (11) und eine linke Gehäusezone (12). Beide Zonen (11, 12) befinden sich unterhalb einer Flanschzone (13). Beide Gehäusezonen (11, 12) haben jeweils eine Breite von ca. 23 mm.

In der Oberseite des Grundkörpers (10) sind zur Lagerung der Klemmvorrichtung an dem sie tragenden Schlitten (1) zwei Gewindebohrungen (18) eingearbeitet, vgl. Figur 1.

Die Gehäusezone (12) weist zur Aufnahme des Antriebs (160) eine mehrstufige Sacklochbohrung (21) auf, deren Mittellinie (29) parallel zur Führungslängsrichtung (2) orientiert ist, vgl. Figur 3. Die Sacklochbohrung (21) setzt sich aus einer Zylinderflächenausnehmung (22) und einer Keilgetriebeausnehmung (23) zusammen. Zwischen beiden Ausnehmungen (22, 23) liegt ein planer Gehäusebund (27). Die Zylinderflächenausnehmung (22) ist bei der Verwendung eines Kolbens mit kreisrundem Querschnitt eine Zylindermantelfläche. Der Kolbenquerschnitt misst hier z.B. 314 mm².

Die Keilgetriebeausnehmung (23) ist nach den Figuren 3 und 4 eine weitgehend ovale Ausnehmung mit planem Grund. Nach Figur 2 hat sie oben und unten eine Führungsrinne (25), in der der Käfig (71, 72) ohne seitliche Begrenzung geführt ist. Er wird nur in seiner Vertikalbeweglichkeit begrenzt. Im planen Grund befinden sich zwei kurze zylindrische Sacklochbohrungen (26), vgl. Figur 4, die ebenfalls jeweils einen ebenen Grund aufweisen. Ihre Mittellinien liegen z.B. in einer Ebene. Jede Sacklochbohrung (26) führt hier eine Rückholfeder (88).

Quer zur Stufenbohrung (21) verläuft eine Gehemmebohrung (30, 130), deren Mittellinie (39, 139), die Mittellinie (29) der Stufenbohrung (21) kreuzt oder schneidet. Hierbei kann die Mittellinie (39, 139) gegenüber der Mittellinie (29) - bei entsprechender Anpassung des Keilwinkels (49), vgl. Figuren 8 oder 9, - einen Winkel von 90 ± 3 Winkelgraden einnehmen.

In der Gehäusezone (12) verläuft die Mittellinie (129) parallel zur Führungslängsrichtung (2). Die Mittellinie (139) der Gehemmebohrung (130) schneidet senkrecht die vertikale Mittenlängsebene (6).

In der Gehäusezone (11) ist die Mittellinie (29) der Zylinderflächenausnehmung (22) gegenüber der Führungslängsrichtung (2) und der vertikalen Mittenlängsebene (6) z.B. um 1,45 Winkelgrade geneigt.

Die Gehemmebohrung (30, 130) hat vier abgestufte Bereiche, vgl. Figur 3. Von der Grundkörperaußenseite her sind das eine Dichtsitzbohrung (31), eine Hauptbohrung (32), eine Druckstückführungsbohrung (33) und eine Austrittsausnehmung (34). Die Hauptbohrung (32) schneidet sich mit der Keilgetriebeausnehmung (23). In diesem Bereich, vgl. Figur 3, befindet sich ein z.B. zwei Zylinderrollen (91, 92) lagernder Käfig (71).

Die zwischen der Gehäuseaußenseite und der Hauptbohrung (32) gelegene Dichtsitzbohrung (31) nimmt eine Einstellschraube (45, 145) auf. Im Bereich der Einstellschraube (45, 145) trägt die Hauptbohrung (32) zur einstellbaren Positionierung der Einstellschraube (45, 145) ein Feingewinde.

Die Einstellschraube (45, 145) ist z.B. eine zylindrische Scheibe, die an der äußeren Stirnfläche Bohrungen für den Eingriff eines Zapfenschlüssels aufweist. Sie hat z.B. eine innere, plane Stirnfläche (46), die in den Ausführungsbeispielen normal zu ihrer Mittellinie, sie ist deckungsgleich zur Mittellinie (39), orientiert ist.

Ferner hat sie ein Außengewinde, das in einer Ringnut endet. In der Nut ist z.B. ein Quetschring als Schraubensicherung und zur Abdichtung gegenüber der Dichtsitzbohrung (31) eingelassen. Mit der Einstellschraube (45, 145) wird bei montierter Vorrichtung zum einen die Spielfreiheit des Schiebekeilgetriebes (50) gewährleistet und zum anderen der Lüftspalt zwischen der Reibfläche (58) der Reibbacke (53) und der Nebenfläche (8) der Führungsschiene (7) beeinflusst.

Je nach Bauart des Grundkörpers (10) ist es auch möglich, auf die Einstellschraube (45, 145) zu verzichten, vgl. Figuren 5 bis 14. In diesem Fall ist die Stirnfläche (46) ein integrales Bestandteil des Grundkörpers (10).

Die senkrecht zur vertikalen Mittenlängsebene (6) orientierte Gehemmebohrung (130) der Gehäusezone (12) weist zur Lagerung der Einstellschraube (145) eine Dichtsitzbohrung (131) auf, deren Mittellinie (139) sich mit der Mittellinie (159) im Bereich der äußeren Stirnseite der Einstellschraube (145) nach Figur 4 unter 1,45 Winkelgraden schneidet.
Der Schnittwinkel kann im Allgemeinen zwischen 0,5 und 5 Winkelgraden liegen. Die zur Führungsschiene (7) hin verlängerte Mittellinie (159) schneidet die Mittenlängsebene (6) nach Figur 4 einige Millimeter vor der Mittellinie (139). Der Schnittpunkt ist zur vorderen Stirnseite (14) des Gehäuses (10) hin versetzt.

Innerhalb der Gehäusezone (11) fluchtet die Dichtsitzbohrung (31) mit der Hauptbohrung (32). Hier schneidet sich die Mittellinie der Kombination aus Druckstückführungsbohrung (33) und Austrittsausnehmung (34) mit der Mittellinie (39) z.B. unter 1,45 Winkelgraden. Es schneiden sich die Mittellinie (39) und die Mittellinie (59) im Bereich der Gehäuseaußenwandung der Gehäusezone (11). Zugleich treffen sich die Mittellinien (39, 139) der beiden Einstellschrauben (45, 145) auf der vertikalen Mittenlängsebene (6). Der Schnittpunkt ist ebenfalls gegenüber der Mittellinie (59) zur Mitte des Gehäuses (10) hin versetzt angeordnet.

Aufgrund dieser Neigung der Abrollzonen (46) der Einstellschrauben (45, 145) verengt sich der quer zur Führungslängsrichtung (2) messbare Abstand der Einstellschraube (45) gegenüber dem Druckstück (54, 154) mit zunehmender Tiefe der Stufenbohrung (21).

Die Dichtsitzbohrung (31, 131) hat ein Innengewinde, in das die Einstellschraube (45, 145) eingeschraubt ist. Der Kerndurchmesser der Einstellschraube (45, 145) ist zwischen 0,75 und 1,5 mm größer als der maximale Durchmesser des Druckstücks (54, 154). Die Dichtsitzbohrung (31, 131) hat zugleich im Bereich der Gehäuseaußenwandung eine mehrere Millimeter tiefe Einsenkung (17), deren Durchmesser z.B. 3 bis 4 mm größer ist als der Kerndurchmesser der Einstellschraube (45, 145).

Nach den Figuren 3 und 4 hat die Einstellschraube (145) jeweils einen Deckelflansch (47) mit dem sie ggf. dicht auf dem Grund der Einsenkung (17) aufliegt. Durch die Auflage des Deckelflansches (47) auf dem Grund der Einsenkung (17) hat die Einstellschraube (45, 145) bei dieser Ausführungsvariante ihre Funktion als tiefeneinstellbare Schraube verloren. Ggf. ist zwischen dem Deckelflansch (47) und dem Einstellschraubengewinde ein O-Ring als zusätzliche Dichtung angeordnet.

Alternativ kann die Einstellschraube (45, 145) auch ohne den Deckelflansch (47) gefertigt sein. In diesem Fall wird er dicht und verdrehsicher im Gewinde eingeklebt.

Das Druckstück (54, 154), vgl. auch Figur 7 oder 9, hat gegenüber der an ihr abwälzenden Zylinderrolle (92) eine ebene Druckstückabrollfläche (55), deren Flächennormale parallel zur Mittellinie (159) des Druckstücks (54, 154) orientiert ist. Das Gleiche gilt für die Einstellschraube (45, 145). Auch ihre - eine Zylinderrolle abstützende - Abrollzone (46) ist normal zu ihrer Mittellinie (139) ausgerichtet.

Die Druckstückführungsbohrung (33) schließt sich Richtung Führungsschiene (7) an die Hauptbohrung (32) an. Sie geht über einen z.B. planen Gehäusebund (35) in die Austrittsausnehmung (34) über. Letztere hat einen kleineren Querschnitt als die Druckstückführungsbohrung (33). Die hat ggf. einen unrunden Querschnitt.

Das Druckstück (54) ist der zylindrische Kolben der Reibbacke (53). Am Kolben (54) ist eine Kolbenstange (57) angeformt, vgl. Figur 3. Die in die Nut (16) hineinragende Stirnseite der Kolbenstange (57) trägt an ihrem freien Ende die Reibfläche (58) der Reibbacke (53). Letztere hat eine Mittellinie, die mit der Mittellinie (39) der Druckstückführungsbohrung (33) deckungsgleich ist.

Die Kolbenstange (57) ragt bei betätigtem Reibgehemme (51) aus der Austrittsausnehmung (34) heraus. Am Übergang der Kolbenstange (57) zum Kolben (54) befindet sich eine z.B. ringkanalartige Stirnnut (56), in der nach den Figuren 3 und 4 ein elastischer Rückhubring (52) mit z.B. rechteckigem Einzelquerschnitt sitzt. Der Rückhubring (52) hält bei unbetätigtem Reibgehemme - die Vorrichtung hat keine Klemm- oder Bremswirkung - das Druckstück (54) in seiner hinteren Position.

Die Kolbenstange (57), deren äußere, radiale Kontur innerhalb der Stirnnut (56) liegt, kann zur Verdrehsicherung um die Mittellinie (39) einen zumindest annähernd quadratischen Querschnitt aufweisen. Zur Verdrehsicherung sind auch beliebige andere Querschnitte für die Kolbenstange (57) denkbar. Es ist auch möglich, die Verdrehsicherung in den Kolben (54) zu verlegen.

Zwischen den Kontaktflächen (46) und (55) ist der in die Kolbenstange (63) des Aktors (61) integrierte Käfig (71) angeordnet. Der Käfig hat hier einen quaderförmigen Grundkörper z.B. mit einem im Wesentlichen rechteckigen Querschnitt. Oberhalb und unterhalb des gedachten Käfigquerschnitts sind z.B. 3,5 mm hohe und 4,5 mm breite Führungsstege (73) angeformt. Die Führungsstege (73) kontaktieren die Führungsrinnen (25) des Gehäuses (10). Sie sind daher zu den Führungsrinnen (25) hin abgerundet, wobei der Rundungsradius der halben Stegbreite entspricht. In der dem Kolben (61) abgewandten Stirnseite weist der Käfig (71) im Bereich eines jeden Führungsstegs (73) jeweils eine Längsbohrung (76) - zur Aufnahme einer Rückholfeder (88) - auf, vgl. Figur 14. In Figur 4 ist in der Gehäusezone (11) der Käfig (71) in der dem Kolben (61) abgewandten Hälfte im Bereich der oberen Rückholfeder (88) geschnitten.

Quer zum Grundkörper weist der Käfig (71) eine Querausnehmung (81) zur Lagerung der Wälzkörper (91, 92) auf, vgl. auch Figur 14. Die Höhe der Querausnehmung (81) entspricht z.B. der Länge der Wälzkörper (91, 92). Die Querausnehmung (81) hat normal zur Aktorverfahrrichtung zwei zumindest bereichsweise plane Kanalwandungen (85, 86). Ggf. werden beide Kanalwandungen (85, 86) oder zumindest diejenige, die beim Betrieb der Vorrichtung der höheren Flächenpressung standhalten muss, mit einer verschleißfesten Beschichtung, z.B. einer Hartverchromung, Nitrierschicht oder dergleichen ausgestattet.

Der Durchmesser der in der Querausnehmung (81) angeordneten Zylinderrollen (91, 92) beträgt im Ausführungsbeispiel 5 mm. Die Länge der Wälzkörper (91, 92) misst z.B. 8 mm. Dementsprechend ist die Querausnehmung bezüglich ihrer Breite und Höhe jeweils um z.B. 0,05 bis 0,1 mm größer. Die Zylinderrollen (91, 92) sind zwischen ihren planen Stirnflächen und ihrer Zylindermantelfläche mit einem Radius von z.B. 0,5 bis 1,2 mm abgerundet.

Der in der Zylinderbohrung (22) geführte Pneumatikkolben (61) weist eine Ringnut auf, in der nach Figur 3 ein Dichtring (62) angeordnet ist. Die Kolbenvorderseite weist nach der Figur 15 eine ca. 0,5 mm tiefe, z.B. geradlinige Luftverteilnut (69) auf, die im Falle einer pneumatischen Kolbenbetätigung die Druckluftverteilung unterstützen soll.

In der Gehäusezone (11) liegt nach Figur 3 der pneumatisch zurückgefahrene Aktor (61) an einem scheibenförmigen Deckel (40) an. Der Deckel (40), dessen äußere Stirnfläche im Ausführungsbeispiel bündig mit der Vorderseite (14) des Grundkörpers (10) abschließt, hat dazu eine umlaufende Ringnut (41), in der ein Dichtring (42) angeordnet ist. Bei einem Pneumatikkolben (61) mit kreisrunder Querschnittsform hat der Deckel (40) ein Außengewinde, über das er im Grundkörper (10) durch Einschrauben befestigt ist.

In der Gehäusezone (12) wird anstelle des Deckels (40) der Federtopf (28) verwendet. Die in ihm gelagerte Schraubendruckfeder (98) liegt auf der kolbenbodenseitigen Stirnfläche des Aktors (61) auf.

In dem Ausführungsbeispiel der Figuren 1 bis 4 liegt bei unbetätigter Vorrichtung in der Gehäusezone (12) der Pneumatikkolben (61) am Deckel (40) an, vgl. Figur 3. Die äußere, rechte Zylinderrolle (91) kontaktiert die Einstellschraube (45), während die innere, linke Zylinderrolle (92) an der Druckstückabrollfläche (55) des Druckstückes (54) anliegt. Die Rückholfedern (88) sorgen für eine spielfreie Anlage.

Beispielsweise bei Vorrichtungen, die geringere Klemm- oder Bremskräfte erfordern, können die Zylinderrollen durch Kugeln ersetzt werden. Die Kugeln sitzen dann im Käfig (71) in entsprechenden Führungsbohrungen. Das Druckstück (54) kann in diesem Fall anstelle einer ebenen Abrollfläche (55) auch eine kugelführende Rinne aufweisen. Werden mehrere Führungsbohrungen pro Käfig verwendet, können diese - bezogen auf die Führungslängsrichtung - nebeneinander und/oder hintereinander angeordnet sein. Werden sie hintereinander angeordnet, müssen die vorausrollenden Wälzkörper entsprechend dem Keilwinkel kleinere Durchmesser haben.

Die in Figur 3 dargestellte Klemmung befindet sich im unbetätigten Zustand. Der Pneumatikkolben (61) liegt am Deckel (40) an. Beispielsweise über eine am Gehäuse (10) angeordnete Zuluftbohrung (37), vgl. Figur 7, wird Druckluft zwischen die Kolbenbodenseite und die Rückseite des Deckels (40) eingepresst. Hierdurch wird der Aktor (61) und der Käfig (72) - u.a. gegen die Wirkung der Rückholfedern (88) - nach vorn verschoben. Dabei rollen die beiden Zylinderrollen (91, 92) zwischen der Einstellschraube (45) und dem Druckstück (54) aneinander ab. In der Folge gibt das Druckstück (54) unter einer Kompression des elastischen Rückhubringes (59) nach. Die Reibbacke (53) wandert nach Figur 3 nach links, um sich an der Nebenfläche (8) der Führungsschiene (7) anzulegen, vgl. Figuren 2 und 4.

Zum Lösen der Bremse bzw. Klemmung wird der hintere Zuluftanschluss (37) entlüftet und der vordere Zuluftanschluss (38) mit Druckluft beaufschlagt. Zudem bewegen die Rückholfedern (88) den Käfig (71) nach hinten. Zugleich schiebt der sich entlastende Rückhubring (52) die Reibbacke (53) in ihre aus Figur 3 bekannte Ausgangsposition. Die Klemmung bzw. Bremse ist geöffnet.

Bei der Vorrichtungsvariante mit dem einfachwirkenden Aktor (160), vgl. Gehäusezone (12), erfolgt das Klemmen und/oder Bremsen mit Hilfe der Schraubenfedern (98) des Federspeichers, sobald der pneumatische kolbenstangenseitige Druckraum entlüftet wird. Die Schraubenfeder (98) schiebt den Kolben (61) nach vorn, wobei die abrollenden Wälzkörper (91, 92) den Käfig (71) gegen die Wirkung der erheblich schwächeren Rückholfedern (88) nach vorn schieben, um das Druckstück (154) gegen die Führungsschiene (7) zu pressen.

Zum Lösen der Vorrichtung wird über die Druckluftleitung der kolbenstangenseitige Druckraum mit Druckluft versorgt, so dass sich der Aktor (61) zurückbewegt, um hierbei den Federspeicher zu laden. Die Schraubendruckfedern (98) werden komprimiert.

Bei Textstellen, die die Wortfolge "zumindest annähernd" im Zusammenhang mit einer parallelen oder senkrechten Anordnung von zwei abstrakten Linien oder von zwei konkreten Gegenständen aufweisen, sind Abweichungen von der Parallelen oder Senkrechten von bis zu ± 3 Winkelgraden zugelassen.

Die in den Figuren dargestellten Varianten können ggf. miteinander kombiniert werden.

### Bezugszeichenliste:

- 1: Schlitten
- 2: Führungslängsrichtung, Schlittenbewegung, Verschieberichtung, Schlittenverfahrrichtung
- 3: Klemmrichtung
- 5: Maschinenbett
- 6: vertikale Mittenlängsebene
- 7: Schiene, Führungsschiene
- 8, 9: Nebenflächen

- 10: Grundkörper, c-förmig; Gehäuse
- 11: Gehäusezone, rechts
- 12: Gehäusezone, links
- 13: Flanschzone
- 14: Vorderseite; Stirnfläche
- 15: Führungsbohrung
- 16: Nut
- 17: Einsenkung
- 18: Gehäusegewindebohrungen, Befestigungsbohrungen
- 19: Führungswinkel, zwischen (2) und (29, 129)

- 21: Sacklochbohrung, gestuft
- 22: Zylinderflächenausnehmung, Zylinderbohrung, Stellgliedlängsführung, Längsführung
- 23: Keilgetriebeausnehmung
- 24: Gehäusezwischenwand
- 25: Führungsrinne
- 26: Sacklochbohrung in (23)
- 27: Gehäusebund
- 28: Federtopf, z.B. mit Außengewinde
- 29, 129: Mittellinie von (21)
- 30, 130: Gehemmebohrung, Gehemmeausnehmung
- 31, 131: Dichtsitzbohrung
- 32: Hauptbohrung
- 33: Druckstückführungsbohrung
- 34: Austrittsausnehmung
- 35: Gehäusebund
- 37: Zuluftanschluss, Druckluftbohrung hinten
- 38: Zuluftanschluss, Druckluftbohrung vorn
- 39, 139: Mittellinie von (30)

- 40: Deckel
- 41: Ringnut, umlaufend
- 42: Dichtring

- 45, 145: Einstellschraube; Stützelement, Keilgetriebeteil
- 46: Stirnfläche, innen; Abrollzone, Keilzone, Kontaktfläche
- 47: Deckelflansch
- 49: Keilwinkel, zwischen (2) und (46)

- 50, 150: Keilgetriebe, Schiebekeilgetriebe
- 51, 151: Reibgehemme
- 52: Rückhubring
- 53, 153: Reibbacken
- 54, 154: Druckstück, zyl. Kolben; Keilgetriebeteil
- 55: Druckstückabrollfläche, Abrollfläche, Kontaktfläche
- 56: Stirnnut
- 57: Kolbenstange
- 58: Reibfläche
- 59: Mittellinie von (54, 154)

- 60, 160: Stellglied, Antrieb, pneumatisch/pneumatisch
- 61, 161: Kolben, Pneumatikkolben, Aktor
- 62: Kolbendichtung, Dichtring
- 63: Kolbenstange
- 64: Aktormittellinie, Kolbenstangenmittellinie
- 65: Gleitkante, Gleitpunkt
- 67: Anschläge, vorn, kolbenstangenseitig
- 68: Anschläge, hinten, kolbenbodenseitig
- 69: Luftverteilnut

- 71: Käfig; Teil der Kolbenstange (63)
- 73: Führungsstege
- 74: Führungszapfen
- 75: Dichtring
- 76: Längsbohrungen, zylindrisch für (88)
- 77: Kippwinkel, zwischen (29) und (64)

- 81: Querausnehmung, Rechteckkanal
- 82: Beschichtung mit niedrigem Reibwert
- 85: Kanalwandung, vorn; Wandung
- 86: Kanalwandung, hinten; Wandung
- 88: Rückholfedern, Rückhubfederelement, Schraubendruckfeder

- 91, 92: Zylinderrollen, Wälzkörper; Keilgetriebeteil
- 98: Schraubendruckfeder

- 246: Ebene zur Flache (46, 146)
- 250: Hilfsebene zwischen (246) und (255)
- 255: Ebene zur Flache (55, 155)

## Patentansprüche

1. Brems- und/oder Klemmvorrichtung eines an mindestens einer Schiene geführten Schlittens,
- wobei die in einem Gehäuse (10) untergebrachte Vorrichtung mindestens ein, über ein Keilgetriebe (50, 150) betätigbares, Reibgehemme (51, 151) umfasst, das wenigstens ein an die Schiene (7) anpressbares Druckstück (54, 154) und/oder Reibbacken (53, 153) aufweist,
- wobei die mit Hilfe von Fremdenergie bewegten Keilgetriebeteile (45, 145, 154, 71, 91, 92) zur Be- und zur Entlastung des einzelnen Reibgehemme (51, 151) pro Be- und Entlastungsrichtung mittels mindestens eines Stellglieds (6C, 160) oder mittels eines Federsystems bewegbar sind, wobei das Federsystem mindestens ein Federelement (88, 98) umfasst,
- wobei das Keilgetriebe (50, 150) mindestens einen Käfig (71) aufweist, der zwischen mindestens einem Druckstück (54, 154) und/oder Reibbacken (53, 153) und mindestens einer gehäuseseitigen Abrollzone (46) oder einem im Gehäuse (10) angeordneten Stützelement (45, 145) verschiebbar gelagert ist,
- **dadurch gekennzeichnet, dass** der mindestens eine Käfig (71) quer zu seiner Verschieberichtung mindestens eine Querausnehmung (81) aufweist, in dem mehrere Wälzkörper (91, 92) - zwei oder Vielfache von zwei - angeordnet sind, die sich quer zur Verschieberichtung nebeneinanderliegend kontaktieren,
- dass das bewegliche Teil (61) des Stellgliedes (60, 160), einschließlich der Langsführung (22) des Stellgliedes (60, 160), gegenüber der Schlittenverfahrrichtung (2) einen Keilwinkel von 0,2 und 5 Winkelgraden einschließt,
- dass die gehäuseseitige Abrollzone (46) oder das Stützelement (45, 145) eine dem Käfig (71) zugewandte Stirnseite hat, die zumindest bereichsweise eine ebene Fläche oder Rinne aufweist, die parallel zur Verfahrrichtung des beweglichen Teils (61) des Stellgliedes und/oder dessen Längsführung (22) ausgerichtet ist und
- dass das Druckstück (54, 154) eine Abrollfläche (55) aufweist, deren Flächennormale oder Mittellinie (59) senkrecht zur Schlittenverfahrrichtung (2) ausgerichtet ist.

2. Vorrichtung gemäß Anspruch 1, **dadurch gekennzeichnet, dass** das Stützelement (45, 145) ein Bereich des Grundkörpers (10) ist.

3. Vorrichtung gemäß Anspruch 1 oder 2, **dadurch gekennzeichnet, dass** das Stellglied (60) eine Zylinder-Kolben-Einheit ist.

4. Vorrichtung gemäß Anspruch 3, **dadurch gekennzeichnet, dass** das Stellglied (60, 160) als bewegliches Teil (61) einen Kolben hat, dessen Kolbenstange (63) den Käfig (71) umfasst.

5. Vorrichtung gemäß Anspruch 1, **dadurch gekennzeichnet, dass** bei paarweise benutzten Wälzkörpern (91, 92) deren Mittelpunkte oder Mittellinien in einer Ebene liegen, die normal zur Kolbenstangenmittellinie orientiert ist.

6. Vorrichtung gemäß Anspruch 1, **dadurch gekennzeichnet, dass** das bewegliche Teil (61) des Stellglieds (60, 160) zum Lösen der Reibbacke (53, 153) von einem geladenen Federspeicher (88, 98) angetrieben wird.

7. Brems- und/oder Klemmvorrichtung eines an mindestens einer Schiene geführten Schlittens,
- wobei die in einem Gehäuse (10) untergebrachte Vorrichtung mindestens ein, über ein Keilgetriebe (50, 150) betätigbares, Reibgehemme (51, 151) umfasst, das wenigstens ein an die Schiene (7) anpressbares Druckstück (54, 154) und/oder Reibbacken (53, 153) aufweist,
- wobei die mit Hilfe von Fremdenergie bewegten Keilgetriebeteile (45, 145, 54, 154, 71, 91, 92) zur Be- und zur Entlastung des einzelnen Reibgehemmes (51, 151) pro Be- und Entlastungsrichtung mittels mindestens eines Stellglieds (60, 160) oder mittels eines Federsystems bewegbar sind, wobei das Federsystem mindestens ein Federelement (88, 98) umfasst,
- wobei das Keilgetriebe (50, 150) mindestens einen Käfig (71) aufweist, der zwischen mindestens einem Druckstück (54, 154) und/oder Reibbacken (53, 153) und mindestens einer gehäuseseitigen Abrollzone (46) oder einem im Gehäuse (10) angeordneten Stützelement (45, 145) verschiebbar gelagert ist,
- wobei der mindestens eine Käfig (71) quer zu seiner Verschieberichtung mindestens eine Querausnehmung (81) aufweist, in dem mehrere Wälzkörper (91, 92) - zwei oder Vielfache von zwei - angeordnet sind, die sich quer zur Verschieberichtung nebeneinanderliegend kontaktieren,
**dadurch gekennzeichnet,**
- **dass** die gehäuseseitige Abrollzone (46) oder das Stützelement (45, 145) eine dem Käfig (71) zugewandte Stirnseite hat, die zumindest bereichsweise eine ebene Fläche oder Rinne aufweist, die gegenüber der Schlittenverfahrrichtung (2) einen Keilwinkel (49) von 0,2 bis 5 Winkelgraden einschließt und
- **dass** die Längsführung (22) des beweglichen Teils (61) des Stellgliedes (60, 160) mit der Schlittenverfahrrichtung (2) einen Führungswinkel (19) einschließt, der in einem Bereich liegt, der zwischen Null Winkelgraden und dem halben Keilwinkel (49) ± einem Viertel des Keilwinkels (49) definiert ist.

8. Vorrichtung gemäß Anspruch 7, **dadurch gekennzeichnet, dass** der Führungswinkel (19) im Bereich des halben Verfahrhubs des beweglichen Teils (61) des Stellgliedes (60, 160) dem halben Keilwinkel (49) ± 0,25 Winkelgraden entspricht.

9. Vorrichtung nach mindestens einem der vorgenannten Ansprüche, **dadurch gekennzeichnet, dass** der Käfig (71) eine Querausnehmung (81) hat, dessen in Verfahrrichtung des Aktors (61) orientierte Wandungen (85, 86) eine reibungsmindernde Beschichtung (82) aufweisen, wobei der Reibwert der Paarung Wandung (85, 86)/Wälzkörper (91, 92) kleiner als die Hälfte des Reibwertes ist, der zwischen den sich kontaktierenden Wälzkörpern (91, 92) vorhanden ist.

10. Vorrichtung nach mindestens einem der vorgenannten Ansprüche, **dadurch gekennzeichnet, dass** die Kolbenstange (63) im Bereich des freien Endes des Käfigs (71) eine der Abrollzone (46) zugewandte Kante (65) oder Ecke aufweist, die eine gleitfähigen Beschichtung aufweist oder an der eine gewölbte Gleitfläche oder ein beweglicher Gleitschuh angeordnet ist.

## Claims

1. A braking and/or clamping apparatus associated with a slide unit and guided along at least one rail,
- said apparatus accommodated in a housing (10) and comprising at least one frictional inhibiting mechanism (51, 151) adapted to be actuated via a wedge-type transmission (50, 150), said mechanism comprising at least one pressure member (54, 154) adapted to be urged against rail (7) and/or friction jaws (53, 153),
- said wedge-type transmission members (45, 145, 154, 71, 91, 92) being moved by means of extraneous energy and adapted to be moved by means of least one actuator (60, 160) or by means of a spring system for each loading and relieving of said individual friction inhibiting mechanisms (51, 151) in each direction of loading and relief, said spring system comprising at least one spring element (88, 98), and
- said wedge-type transmission (50, 150) comprising at least one cage (71) mounted for displacement between at least one pressure member (54, 154) and/ or said friction jaws (53, 153) and at least one roll-off zone (46) facing the housing or a supporting element (45, 145) disposed inside the housing (10),
- **characterized in that** said at least one cage (71) has at least one transverse opening (81) extending transversely to its direction of displacement, said cage having therein a plurality of rolling elements (91, 92), said plurality comprising two or multiples of two, and said rolling elements contacting each other in a side-by-side relationship and in a direction transverse to the direction of displacement,
- **in that** the movable part (61) and the longitudinal guide portion (22) of actuator (60, 160) include a wedge angle of 0.2 to 5 degrees of an angle relative to the direction (2) of slide displacement,
- **in that** the housing-side roll-off zone (46) or the support element (45, 145) has an end surface facing cage (71) and comprising at least in portions thereof a planar surface or a groove oriented parallel with the direction of displacement of the movable part (61) of said actuator and/or the longitudinal guide element (22) thereof, and
- **in that** pressure member (54, 154) has a roll-off surface (55) of which the normal or centre line (59) is oriented at right angles to the direction (2) of slide displacement.

2. Apparatus as claimed in claim 1, **characterized in that** support element (45, 145) is formed by a portion of body (10).

3. Apparatus as claimed in claim 1 or 2, **characterized in that** actuator (60) comprises a cylinder-piston unit.

4. Apparatus as claimed in claim 3, **characterized in that** the movable part (61) of actuator (60, 160) is a piston of which the piston rod (63) comprises the cage (71).

5. Apparatus as claimed in claim 1, **characterized in that**, where said rolling-off elements (91, 92) are used in pairs, the centres or centre lines thereof extend in a plane oriented normal to the centre line of said piston rod.

6. Apparatus as claimed in claim 1, **characterized in that**, for disengaging friction jaw (53, 153), the movable part (61) of actuator (60, 160) is driven by a loaded spring memory element (88, 98).

7. A braking and/or clamping apparatus associated with a slide unit guided along at least one rail,
- said apparatus accommodated in a housing (10) and comprising at least one frictional inhibiting mechanism (51, 151) adapted to be actuated via a wedge-type transmission (50, 150), said mechanism comprising at least one pressure member (54, 154) adapted to be urged against rail (7) and/or friction jaws (53, 153),
- said wedge-type transmission members (45, 145, 154, 71, 91, 92) being moved by means of extraneous energy and adapted to be moved by means of least one actuator (60, 160) or by means of a spring system for each loading and relieving of said individual friction inhibiting mechanisms (51, 151) in each direction of loading and relief, said spring system comprising at least one spring element (88, 98), and
- said wedge-type transmission (50, 150) comprising at least one cage (71) mounted for displacement between at least one pressure member (54, 154) and/ or said friction jaws (53, 153) and at least one roll-off zone (46) turned towards the housing or a supporting element (45, 145) disposed inside the housing (10),
- said at least one cage (71) having at least one transverse opening (81) extending transversely to its direction of displacement, said cage having therein a plurality of rolling elements (91, 92), said plurality comprising two or multiples of two and said rolling-off elements contacting each other in a side-by-side relationship and in a direction transverse to the direction of displacement,
**characterized in that**
- the housing-side rolling-off zone (46) or the support element (45, 145) has an end surface facing towards cage (71) and comprising at least in portions thereof a planar surface or a groove including a wedge angle (49) of 0.2 to 5 degrees of an angle relative to the direction (2) of slide displacement and
- **in that** said longitudinal guide element (22) of the movable part (61) of actuator (60, 160) includes with the direction (2) of slide displacement a guide angle (19) within a range between zero degrees of an angle and one half the wedge angle (49) plus/minus one quarter of the wedge angle (49).

8. Apparatus as claimed in claim 7, **characterized in that** the guide angle (19) within one half the displacement stroke of the movable part (61) of the actuator (60, 160) corresponds to one half the wedge angle (49) plus/minus 0, 25 degrees of an angle.

9. Apparatus as claimed in at least one of the preceding claims, **characterized in that** the cage (71) has an opening (81) extending transversely therethrough of which the walls (85, 86) oriented in the direction of displacement of actuator (61) have thereon a friction-reducing coating (82), with the coefficient of friction of the walls (85, 86) relative to rolling elements (91, 92) being lower than the coefficient of friction existing between the mutually contacting rolling elements (91, 92).

10. Apparatus as claimed in at least one of the preceding claims, **characterized in that** the piston rod (63) has in the region of the free end of cage (71) an edge (65) or corner facing roll-off zone (46) having thereon a low-friction coating, or having attached thereto a n convexly curved sliding surface or a movable sliding shoe.

## Revendications

1. Dispositif de freinage et/ou de serrage d'un chariot guidé sur au moins un rail,
- le dispositif qui est logé dans un carter (10) comprenant au moins un patin à friction (51, 151) qui peut être actionné par un mécanisme à clavette (50, 150) qui comprend au moins un élément de pression (54, 154) et/ou des mâchoires à friction (53, 153),
- les éléments (45, 145, 154, 71, 91, 92) du mécanisme à clavette déplacés à l'aide d'énergie extérieure pour le chargement et le déchargement de chaque patin à friction (51, 151) pouvant être déplacés, pour chaque direction de chargement et de déchargement, à l'aide d'au moins un actionneur (60, 160) ou d'un système à ressort, le système à ressort comprenant au moins un élément à ressort (88, 98),
- le mécanisme à clavette (50, 150) comprenant au moins une cage (71) qui est montée de manière coulissante entre au moins un élément de pression (54, 154) et/ou des mâchoires à friction (53, 153) et au moins une zone de roulement (46) côté carter ou un élément d'appui (45, 145) disposé dans le carter (10),
**caractérisé en ce**
- **qu'**au moins une cage (71) présente, transversalement à son sens de coulissement, au moins un évidement transversal (81) où sont disposés plusieurs éléments roulants (91, 92) - deux ou des multiples de deux - qui, en étant disposés côte à côte, transversalement au sens de coulissement, sont en contact entre eux,
- **que** l'élément mobile (61) de l'actionneur (60, 160), y compris le guidage longitudinal (22) de l'actionneur (60, 160) inclut un angle de coin de 0,2 à 5 degrés par rapport au sens de déplacement du chariot (2),
- **que** la zone de roulement (46) côté carter ou l'élément d'appui (45, 145) ont une face frontale orientée vers la cage (71) qui présente au moins par endroits une surface plane ou une rainure orientée parallèlement au sens de déplacement de l'élément mobile (61) de l'actionneur et/ou du guidage longitudinal (22) de ce dernier et
- **que** l'élément de pression (54, 154) présente une surface de roulement (55) dont la normale à la surface ou la ligne médiane (59) est orientée perpendiculairement par rapport au sens de déplacement (2) du chariot.

2. Dispositif selon la revendication 1, **caractérisé en ce que** l'élément de soutien (45, 145) est une zone du corps de base (10).

3. Dispositif selon la revendication 1 ou 2, **caractérisé en ce que** l'actionneur (60) est une unité cylindre-piston.

4. Dispositif selon la revendication 3, **caractérisé en ce que** l'actionneur (60, 160) a un piston comme pièce mobile (61) dont la tige (63) inclut la cage (71).

5. Dispositif selon la revendication 1, **caractérisé en ce que**, en utilisation des éléments roulants (91, 92) par paires, les points centraux et les lignes médianes de ces éléments sont situés dans un plan orienté normalement par rapport à la ligne médiane de la tige de piston.

6. Dispositif selon la revendication 1, **caractérisé en ce que**, pour le desserrage de la mâchoire à friction (53, 153), la partie mobile (61) de l'actionneur (60, 160) est entraînée par un accumulateur à ressort chargé (88, 98).

7. Dispositif de freinage et/ou de serrage d'un chariot guidé sur au moins un rail,
- le dispositif qui est logé dans un carter (10) comprenant au moins un patin à friction (51, 151) qui peut être actionné par un mécanisme à clavette (50, 150) qui comprend au moins un élément de pression (54, 154), qui peut être appliqué contre le rail (7), et/ou des mâchoires à friction (53, 153),
- les éléments (45, 145, 54, 154, 71, 91, 92) du mécanisme à clavette déplacés à l'aide d'énergie extérieure pour le chargement et le déchargement de chaque patin à friction (51, 151) pouvant être déplacés, pour chaque direction de chargement et de déchargement, à l'aide d'au moins un actionneur (60, 160) ou d'un système à ressort, le système à ressort comprenant au moins un élément ressort (88, 98),
- le mécanisme à clavette (50, 150) comprenant au moins une cage (71) qui est montée de manière coulissante entre au moins un élément de pression (54, 154) et/ou des mâchoires à friction (53, 153) et au moins une zone de roulement (46) côté carter ou un élément d'appui (45, 145) disposé dans le carter (10),
- au moins une cage (71) présentant, transversalement à son sens de coulissement, au moins un évidement transversal (81) où sont disposés plusieurs éléments roulants (91, 92) - deux ou des multiples de deux - qui, en étant disposés côte à côte, transversalement au sens de coulissement, se contactent entre eux,
**caractérisé en ce**
- **que** la zone de roulement (46) côté carter ou l'élément d'appui (45, 145) ont une face frontale orientée vers la cage (71) qui présente au moins par endroits une surface plane ou une rainure qui inclut un angle de coin (49) de 0,2 à 5 degrés par rapport au sens de déplacement du chariot (2) et
- **que** le guidage longitudinal (22) de l'élément mobile (61) de l'actionneur (60, 160) et le sens de déplacement du chariot (2) incluent un angle de guidage (19) qui se situe dans une plage définie entre 0 degré et la moitié de l'angle de coin (49) ± un quart de l'angle de coin (49).

8. Dispositif selon la revendication 7, **caractérisé en ce que** l'angle de guidage (19) dans la zone de la demi-course de l'élément mobile (61) de l'actionneur (60, 160) correspond à la moitié de l'angle de coin (49) ± 0,25 degrés.

9. Dispositif selon au moins une des revendications mentionnées ci-devant, **caractérisé en ce que** la cage (71) a un évidement transversal (81) dont les parois (85, 86) orientées dans la direction de déplacement du piston (61) présentent un revêtement réduisant le frottement (82), le coefficient de frottement du couple paroi (85, 86)/élément roulant (91, 92) étant inférieur à la moitié du coefficient de frottement existant entre les éléments roulants (91, 92) en contact réciproque.

10. Dispositif selon au moins une des revendications mentionnées ci-devant, **caractérisé en ce que** la tige de piston (63) présente, dans la zone de l'extrémité libre de la cage (71), un bord (65) ou un coin orienté vers la zone de roulement (46) qui a un revêtement glissant ou sur lequel se situe une surface de glissement bombée ou un patin mobile.
